(19) Europäisches Patentamt

European Patent Office

Office européen des brevets

(11) **EP 1 274 034 A1**

(12) **EUROPEAN PATENT APPLICATION**

(43) Date of publication:
**08.01.2003 Bulletin 2003/02**

(51) Int Cl.⁷: **G06F 17/60**

(21) Application number: **02077650.6**

(22) Date of filing: **02.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(30) Priority: **06.07.2001 EP 01202606**<br>       **06.09.2001 EP 01203359**<br>       **06.09.2001 US 317682**<br><br>(71) Applicants:<br>  • **Koninklijke KPN N.V.**<br>    **9726 AE Groningen (NL)**<br>  • **Centrum voor Wiskunde en Informatica**<br>    **1098 SJ Amsterdam (NL)**<br><br>(72) Inventors:<br>  • **Driessen, Cornelis Hendricus**<br>    **3411 EH Lopik (NL)** | • **Bomhof, Frederik Willem**<br>  **2253 VK Voorschoten (NL)**<br>• **Jonker, Joost**<br>  **5262 MP Vught (NL)**<br>• **La Poutre, Johannes Antonius**<br>  **1017 TR Amsterdam (NL)**<br>• **Gerding, Enrico Harm**<br>  **1056 NR Amsterdam (NL)**<br>• **Bothe, Sander Marcel**<br>  **1097 CA Amsterdam (NL)**<br><br>(74) Representative: **Wuyts, Koenraad Maria et al**<br>  **Koninklijke KPN N.V.,**<br>  **Intellectual Property Group,**<br>  **P.O. BOX 95321**<br>  **2509 CH The Hague (NL)** |

(54) **Method and system for automated marketing of attention area content**

(57)    System for automatic distribution of attention area content supplied by different suppliers (2) via a network (1) and a mediator (3) to different users (4). The mediator (3) comprises means (5) for distribution of an attention area content supplied by a preferred supplier, and accounting means (6) for recording a distribution price. The mediator also comprises means (7) for processing response data referring to responses of the users to the attention area content, as well as means (8) for transmitting the processed response data and the distribution price to the suppliers. Finally, the mediator comprises means (9) for (periodically) receiving, from the suppliers, a price bid for the distribution of a new attention area content, replacing the attention area content supplied by the preferred supplier, as well as means (10) for mutually comparing each received price bid and the actual distribution price and for selecting as new preferred supplier, the supplier offering the best price.

FIG. 1

**Description**

FIELD OF THE INVENTION

The invention relates to a method for automatic distribution of attention area content such as screen banners, ads and icons to user interfaces such as screens of PC's, TV sets, palmtops and mobile telephones via a transmission network such as the internet, TV distribution system and a telephone network said attention area content being supplied by different -competitive- attention area content suppliers (for example service or goods suppliers) and preferably distributed by an attention area content mediator to different users.
The field of present invention also related to electronic advertising.

BACKGROUND OF THE INVENTION

Generally known is that via internet advertisement banners may be distributed to user interfaces (to the screens of PC's etc.) for example for web browsing. In many cases banners of different suppliers will follow one another. Prices and other conditions for displaying banners commonly are agreed in advance between the respective suppliers and the mediator.

SUMMARY

The present invention presents a method and a system offering the opportunity, preferably by means of a mediator, for automatic and interactive negotiation on the conditions such as the price for displaying ads, banners etc., in general attention area content, on the users' screens.
According to an aspect of the present invention, the mediator enables an auction process, preferably an automated auction process requesting to said attention area content suppliers to offer one or more bids for future distribution, via the mediator, of their respective attention area content, while the mediator selects one or more suppliers, based on a predetermined criterion, for example the best conditions. The present invention can be applied for attention area distribution, their number and size, and for attention area content distribution.
In a preferred embodiment of the invention, one user or group of users or a predetermined, preferably targeted group of users is included in the auction process. In a first step information about one user or a group of users is available to the mediator and at least part of the information is made available by the mediator to one or more suppliers. Said information may be stored information, information gathered through search queries or information available from a user profile. The suppliers, in a second step can then make a bid for allowance for displaying their content in an attention area for the one user or the group of users. Via an auction according to a predetermined criterion, such as the best price conditions, the best supplier or suppliers are selected for displaying the attention area content at the user interface. The auction can be for example a single bid auction (e.g. "Vickrey Auction") or an ascending bid auction (e.g. "English Auction") or a descending auction (e.g. "Dutch Auction"). Initializing or refreshing the attention area content at the user interface may be executed instantaneously or after a predetermined period, via an on-line, real-time process.
Preferably, the mediator collects and processes user information relative to said users and supplies said information to said attention area content suppliers. Said user information preferably comprises response data referring to responses of said users to said attention area content.
So, according to a preferred embodiment the mediator starts and completes a bid process with at least part of all (potential) banner suppliers, requesting them to make a bid for occupying a certain screen area with the supplier's own banner. In this way a (preferably) cyclic "auction" is initiated, in which in every cycle all suppliers are provided with the current reponse to the existing banner and the current price, and in which the suppliers are challenged to offer a higher bid, in order to achieve that their banner is displayed on the user screens. As a result of each auction step the mediator distributes to the users the banner of the supplier which offered the best price conditions. In this automated, continuous process, all suppliers are, once in each cycle, confronted with the user response to the displayed (competitive) banner and are requested to make a higher bid for the banner room, which could be used for their own banner.
When banners are displayed on so-called personized user interfaces (pages, portals etc.) by which each user is enabled to set personal parameters relevant to the content or layout of the interface, the respons to the banners etc. may also comprise the user's personalization settings. This enables the mediator and the banner suppliers to discriminate in user classes. In that way different banner suppliers can be selected for different relevant user classes, for instance characterised by their common interest (in music, sport etc.). Part of those parameters may comprise the user's age or gender which items may be of interest for the suppliers too and in consequence may positively or negatively influence the offered bid price.
The different aspects and embodiments of this invention as disclosed in this patent application can be combined advantageously.

## EXEMPLARY EMBODIMENTS and DETAILED DISCUSSION

References, indicated by [ ], are incorporated herein by reference.

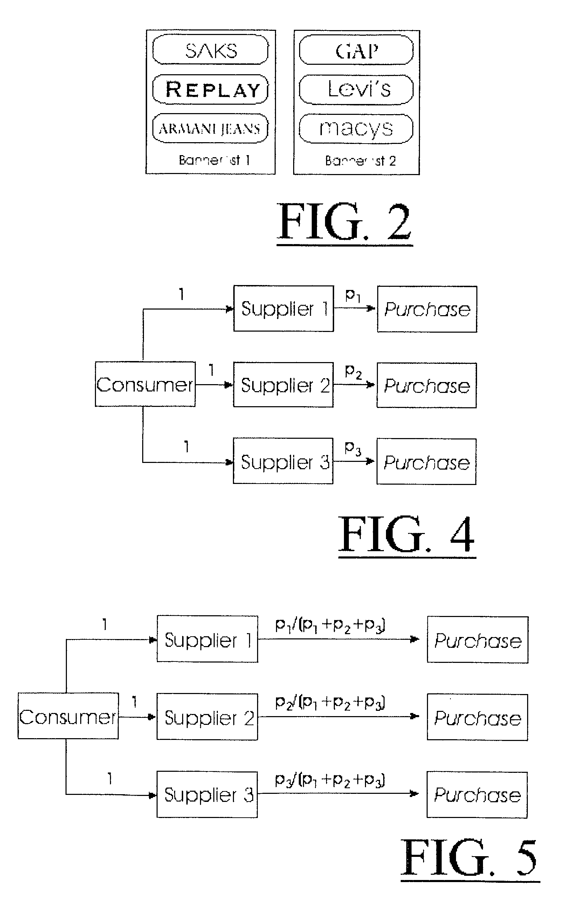

Figure 1 shows an exemplary embodiment of a system which is fit for implementation of the method according to the invention. Hereafter, the system also will be referenced as "Competitive Attention-space System" (CASy).

The system of figure 1 enables automatic distribution of attention area content -banners, advertisements etc.- via a transmission network 1. The attention area content are supplied by (servers of) different attention area content suppliers 2a...2e, distributed by an attention area content mediator 3 to (terminals of) different users 4a...4e.

Mediator 3 comprises distribution means 5, for the distribution of an attention area content supplied by a preferred supplier 2a to the users, and accounting means 6 for recording a distribution price (and quality), which price is billed to supplier 2a.

The mediator 3 also comprises processing means 7, for processing response data referring to responses of the users to the attention area content, as well as transmission means 8, for transmitting the processed response data and the distribution price to suppliers 2a...2e. Responses to the displayed banners etc. may be routed via mediator 3, which detects, counts and statistically processes, by means of the processing means 7, all responses of the users 4. As an alternative, responses to the banners may be received by the actual supplier 2a and forwarded regularly to the processing means 7 of mediator 3, to be processed. The transmission means 8 transmit the processed response data, as well as the distribution price to the suppliers 2a...2e. The supplier servers 2a...2e each comprise a processor 11 controlled by a bidding algorithm, set by the supplier, which is fit to compute a price, based on the received response data, to be offered to the mediator 3 for hiring the attention area content on the users' screens. Mediator 3 comprises receiving means 9, for receiving, from the suppliers 2a...2e their respective price bids for the distribution of a new attention area content, replacing the attention area content supplied by the preferred supplier at that moment.

Mediator 3, moreover, comprises means 10 for mutually comparing all received price bids and the actual distribution price at that moment, and for selecting as new preferred supplier, the supplier, for instance supplier 2d, offering the best (highest) price. The distribution means 5 distribute to the users 4 the new attention area content supplied by the new preferred supplier 2d, while the accounting means 6 record the best price on the account of the new preferred supplier 2d.

Summarizing, the shown exemplary system executes the following steps:

a. Mediator 3 distributes an attention area content supplied by a preferred supplier 2a to the users 4, employing a distribution price and quality; this initial step is optional.

b. Mediator 3 collects and processes user information (user data) like response data, referring to responses of said users to said attention area content.

c. Mediator 3 transmits said processed user data and the actual distribution price to the suppliers 2.

d. The suppliers 2 transmit to mediator 3 a bid (price, quality items) for future distribution of a new attention area content, replacing said attention area content supplied by the supplier at that moment.

e. Mediator 3 mutually compares each bid and the actual distribution conditions (price, quality) and selects the supplier offering the best conditions as new preferred supplier 2d.

f. Mediator 3 distributes the new attention area content supplied by the new preferred supplier 2d, to the users 4, employing the new conditions.

g. The auction process is continued from step b.

The users 4a...4e may set the performance of their interface by means of user personalisation parameters. In that case, the processing means 7 for processing the response data may be enabled to process at least part of the personalisation parameters, which can be transmitted from the user's device 4 to the mediator 3, together with the user's response data. By doing so the transmission means 8 transmit the processed response data -including the respective user data- together with the distribution price to the suppliers 2a...2e. The supplier servers 2a...2e each compute and bid a price, based on the received response data including the processed personal user data ("user profile"). This option enables also the possibility to bring out different bids for different groups of users, based upon their user profiles. When, for instance, users 4a, 4c en 4d have profiles -represented by their personal parameters- which are very interesting for suppliers 2b and 2c, those suppliers will compute a higher bid for hiring attention room on the screens of the user group 4a, 4c en 4d, while other suppliers are more interested in other groups of users. Module 10 of mediator 3 may thus be constructed that, simultaneously, different bids can be granted to different suppliers, distribution means 5 being constructed thus that different groups of users, grouped by matching personal parameters, will be served by always the most interested -and most bidding- supplier.

Below, the framework of the "Competitive Attention-space System" (CASy), shown in figure 1, is discussed more in detail.

Within a nowadays "electronic shopping-mall", the CASy operates by taking the expressed momentary interest of a consumer, say a product and a business sector, and then presenting a suitable shortlist of shops. The CASy assembles the shortlist via the competitive market based mechanism presented here. The information about the consumer's interest, possibly augmented by additional knowledge, is passed on to potential suppliers. These suppliers subsequently compete against each other in an auction, by each placing bids to "purchase" one of a limited number of entries of attention space for this specific consumer.

Figure 2 depicts an example list of auction-winning suppliers, presented to the consumer, showing banner-advertisements tailored towards a consumer's characteristics or preferences.

Figure 3 depicts a schematic extended system-setup using software agents. Software agents may be used, in this preferred embodiments of the CASy to manage the fine grain of interaction, bidding and selection. The system consists of supplier agents 20 and a Central Manager Agent (CMA) 21, residing within the mediator 3 in figure 1, e.g. incorporated in or linked with module 10. The supplier agents purchase attention space (see e.g. figure 2) by bidding on interesting consumers 4(a...e), whereas the CMA 21 executes the auction process.

Each consumer 4 communicates his interest and preferences to the CMA 21, e.g. via its web page. Preferences may include the product that is being searched after and various values for the attributes of the product. The CMA 21 can also consider information on a consumer's profile. The consumer profile consists of more generic information on the consumer. This could include regular personal information like general interests, previous acquisitions, as well as age or zip code; but also general sales-related information like style or the interest in issues as price, quality, and service. The consumer can either be queried directly for this information, or the CMA 21 can derive the information from previous interactions. The consumer can restrict or disable the dissemination of his profile information. E.g., distribution of such information can be limited to for specific or anonymized parts, or to general sales-related information that is derived from the private profile.

The Central Manager Agent (CMA 21) acts as an intermediary between consumers and supplier agents. The task of the CMA 21 is to enable the selection of a set of suppliers for each arriving consumer. The CMA 21 furthermore provides information from the consumer to the supplier agents. Given privacy concerns, the consumer profile will not automatically be communicated in full to the suppliers, as e.g. described below. Information on the consumers could be stored within the CMA 21 for revisiting consumers, leaving open consumers who wish to remain anonymous. The CMA 21 applies the auction: it collects the bids of the supplier agents, selects the winners, charges the selected suppliers, and enables their display.

Each supplier 2 "owns" an agent that acts on the supplier's behalf. These agents are equipped with knowledge and a strategy on behalf of the supplier. Such knowledge can contain amongst others relevant business information on the supplier that is needed for the matching process. This information should determine the supplier's conception of its "niche" in the market, and hence the type of preferred consumer. Typical business information could be the products carried and the intended audience. Furthermore, the goals and limitations of the supplier can be taken into 5 account, such as the current quantity of a certain product in stock or the service level. The main task of a supplier agent is to bid on arriving consumers. To this end, it has to valuate (information about) consumers. Namely, the valuation of a consumer by a supplier agent is closely linked to its bidding strategy: the bid should not outweigh the expected profit (if the supplier is to break even) or percentage thereof. This task can be complicated: the variety of consumers can be great, and the competitive environment can change rapidly. Also, the supplier's conception of the targeted audience may deviate from its actual audience.

The CMA 21 executes the auction protocol, the payment procedure, and the supplier selection mechanism. The actual choice of the auction protocol can depend on many factors. In this discussion, we focus on the single-bid sealed auction, being a communication-efficient auction. With this procedure, each supplier submits a single sealed bid for a particular consumer. The CMA 21 allocates the first position in the list to the highest bidder, the second position to the next highest bidder, and so on. Note that, since the CMA 21 executes the auction for each arriving consumer, suppliers losing an auction could increase their bid in the next auction for a similar consumer.

A payment procedure specifies what should be charged and when. Several different payment schemes are possible for various auction procedures. In a Vickrey auction, the winner pays the price of the second-highest bid. In the Vickrey auction or Uniform Second-Price auction like a first-price auction, the bids are sealed, and each bidder is ignorant of other bids. An item is awarded to the highest bidder at a price equal to the second-highest bid (or highest unsuccessful bid). In other words, a winner pays less than the highest bid. If, for example, bidder A bids $10, bidder B bids $15, and bidder C offers $20, bidder C would win, however he would only pay the price of the second-highest bid, namely $15.

[http://www.agorics.com/Library/Auctions/auction5.html]

The Vickrey auction is a prominent and widely-used auction type, which has been shown to be efficient for independent valuations of the item. The auction is also robust, since revealing ones true preferences is the dominant strategy. In this discussion, we focus on an extension of the Vickrey auction where winners pay the (N+1) price, where N is the number of items (here banners). This is an instance of the generalized Vickrey auction, which has the same auction characteristics as above.

Although the typical business information for the supplier agent can contain many variables that relate to those in a consumer profile, these cannot be matched directly. Rather, the supplier must find and improve its actual niche in the market, especially in the fine-grained advertisement mechanism of the present CASy. Similar observations hold even more for the valuation of a consumer.

The need for accurate valuation and targeting is pronounced when consumers are significantly contested by competing suppliers. We illustrate this by the case of a very expensive department store: consumers arriving in a fancy car are a priori as likely to buy at the store as consumers arriving in a middle-class car. However, when a cheaper department store exists across the street, this competition changes the behavior of the latter consumers much more than of the former. Similarly, in the present CASy the valuation of an advertisement space depends on the selection of and competition between suppliers.

An N+1 auction mechanism is theoretically efficient in case of fully rational agents, complete knowledge, and independent valuations. However, if several suppliers are displayed as in the CASy, the valuation of advertisement space also depends on the selection of and competition between various suppliers. It is then unclear whether an efficient allocation of the attention space will emerge, i.e., a correct match between consumers and suppliers with the largest appearing interests for being displayed together. In practice, this task is even more difficult considering that the software agents have imperfect knowledge of their environment.

In the following, we will show via evolutionary simulation as in the field of Agent-based Computational Economics (ACE) and by implementations of software agents, that the market mechanism according to an embodiment of the invention is indeed effective and results in an efficient allocation. Furthermore, supplier agents learn to properly evaluate their environment and thereby locate their niche in the market.

Agent-based Computational Economics (ACE) is the computational study of economies modelled as evolving systems of autonomous interacting agents. One principal concern of ACE is to understand why certain global regularities have been observed to evolve and persist in decentralized market economies despite the absence of top-down planning and control: for example, trade networks, socially accepted monies, market protocols, business cycles, and the common adoption of technological innovations. The challenge is to demonstrate *constructively* how these global regularities might arise from the bottom up, through the repeated local interactions of autonomous agents. A second principal concern of ACE is to use ACE frameworks normatively, as computational laboratories within which alternative socioeconomic structures can be studied and tested with regard to their effects on individual behavior and social welfare. This normative concern complements a descriptive concern with actually observed global regularities by seeking deeper possible explanations not only for why certain global regularities have been observed to evolve but also why others have not. [http://www.econ.iastate.edu/tesfatsi/ace.htm]

Below, we model the electronic shopping mall for an evolutionary simulation as in ACE, based on the preceding discussion. The goal of the simulation is to assess the feasibility of the market mechanism of the CASy. To this end, we will make some additional assumptions and simplifications, which enables us to study, measure, and visualize the emerging behavior of the CASy.

The CMA 21 has 3 banner advertisements to dispatch (figure 2), and executes the auction as described before. We here abstract away from any interpretation of the profiles. Profiles are represented by a vector of real values. In the simulations, the consumers are classified by a one or two dimensional vector with entries in a {0 : : : 1} range. The profile can reflect a consumer's interests such as price segment, trendiness or quality, or any combination of characteristics projected on 1 or 2 dimensions. We thus model a class of consumers for some given category of products. In the simulation of the CASy, several consumers with different profiles arrive and are contested by the suppliers in the CASy.

We will denote by gross profit the profit that a supplier earns on a product, before the cost of advertisement is taken into account (but after accounting for all other costs), and by net profit the profit after deduction of all costs, including advertisement cost. The goal of a supplier is to maximize net profits, and therefore a supplier tries to sell as many items as possible at the lowest possible advertising costs. The net profit of a supplier is also referred to as the supplier's payoff. The suppliers in the simulation have no initial knowledge of their own actual niche or payoff function in the market.

A bidding strategy specifies the monetary bid for each possible consumer profile. Given the feedback in the form of actual payoff for visiting consumers, a supplier agent adapts its bidding strategy and thereby indirectly learns the consumer behavior and its competitive environment determined by other supplier agents. Note that these two factors are interrelated.

We use evolutionary simulation like in the field of Agent-based Computational Economics (ACE), where suppliers that interact and compete in a market, are evolved, in order to investigate their emerging behavior and the equilibrium situation. Recall that a supplier's goal is to maximize payoff.

We proceed as follows. Each supplier agent is replaced by a population of strategies. These strategies are evaluated and evolved according to the amount of profit they earn in single CASy simulation. In such a CASy simulation, a number of consumers arrive, supplier strategies bid for each of these, and the winners get the expected payoffs. The strategies that are evolved after repeating this process many times, show the emerging behavior of the suppliers. Hence, the process of evolution finds effective strategies for a CASy simulation.

An evolutionary algorithm (EA) is used to adapt the strategies of the supplier agents. EAs are strongly inspired by the genetic evolution theory in biology, as developed by Darwin. EAs typically work as follows. First, for each supplier a population of randomly initialized strategies is generated. The populations are subsequently changed and improved in a number of iterations ("generations") by means of selection and mutation. Selection chooses the better strategies (with higher accumulated payoff) which survive in the next generation. This corresponds to the concept of "survival of the fittest" in nature. The selected strategies are subsequently changed slightly in a random way ("mutation"), to enable diversity in the population.

An implementation is based on "Evolution Strategies" (ES), a branch of evolutionary algorithms that traditionally focuses on real-coded problems. The widely-used Genetic Algorithms (GAs) are more tailored toward binary-coded search spaces. We use standard parameter settings for EAs.

[http://lautaro.fb10.tu-berlin.de/intseit2/xs2evost.html]

We model the purchasing behavior of a single consumer for one isolated supplier. For each supplier i, the expected gross monopolistic profits $E\{\pi_i(c)\}$ is its average gross profits for a possible purchase following the observation of a consumer of its advertisement, while no other supplier is shown. We take

$$E\{\pi_i(c)\} = \mu_i P_i(c),$$

where $P_i(c)$ denotes the monopolistic purchase probability for consumer profile c and $\mu_i$ is a constant value related to the supplier's average profit when a purchase is made. Note that both $\mu_i$ and $P_i(c)$ are taken as an externally imposed model for interaction and are initially not known or available to the supplier.

In the simulation each supplier is given a center of attraction $a_i$, where $P_i(c)$ is maximized. We used two types of purchase probability functions $P_i$ in the experiments: (1) linear functions, where the $P_i$ is proportional to the Euclidean distance $d(c; a_i)$ in the following way:

$$P_i(c) = 1 - \delta d(c,a_i),$$

and (2) Gaussian functions with the highest point corresponding to the center of attraction. The width of the Gaussian curve is then set by parameter $\sigma_i$. For simplicity the maximal monopolistic purchase probability is set constant to 1. This value can be chosen lower, but is chosen for maximal discrimination between various advanced behavior models.

The behavior of consumers shopping for a specific product may be different for different product areas or different consumers populations. We modeled three classes of consumer behavior:

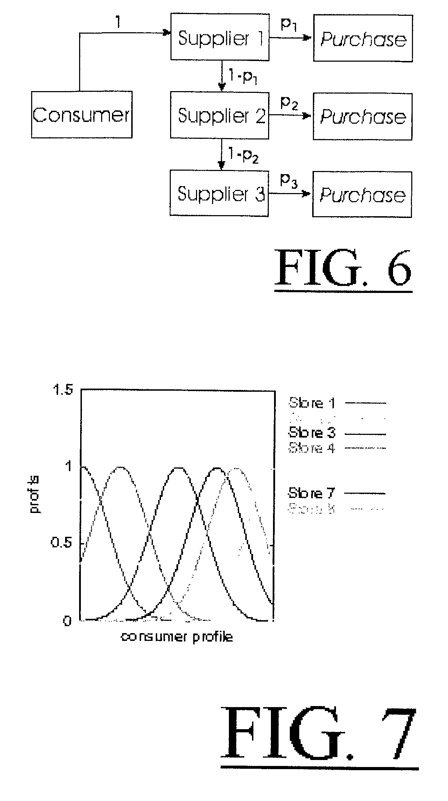

1. "Independent visits with several purchases": In this model (see figure 4) the consumer visits all displayed suppliers, and can buy products at several suppliers (e.g. CDs).
2. "Independent visits with one expected purchase": In this model (see figure 5) a consumer visits all displayed suppliers and then buys on average one product in total (e.g. a computer).
3. "Search-till-found behavior": In this model (see figure 6) the consumer visits the suppliers in sequential order from top to bottom, until he finds a supplier with the proper product, which he buys (e.g. a raisin bread).

In figures 4 to 6 it applies that $P_i = P_i(c)$.

The consumer behavior in these models is stochastic: whether a product is purchased by consumer c at a certain supplier j depends on a probability value $Q_j(c)$. The monopolistic purchase probabilities $P_i(c)$ are the basic parameters, determining these probability values $Q_j(c)$ as shown in figures 4 to 6. The expected gross profits $E\{\rho_j(c)\}$ for supplier j is then given by

$$E\{\rho_j(c)\} = \mu_j Q_j(c).$$

Notice that in the models of figure 5 and 6, the probability that an item is sold at one supplier depends on the monopolistic purchase probabilities of its competitors within the list.

The selection procedure in an auction should ultimately lead to an appropriate selection of suppliers for consumers. We start from the economic point of view of optimizing the revenue of the collection of shops in the shopping mall as a whole. Consider the n suppliers with the largest expected payoffs for a given consumer. We measure the proportion of properly selected n suppliers as the fraction of these n suppliers that are present in the actual list of 3 displays shown to the consumer. From the consumer point of view, we can interpret the expenditures of a consumer at a supplier as a measure for his interest in the supplier. In case that the ratio between expenditures and payoff within a certain business sector is similar for the suppliers in that sector, the above measure is related to both the consumer interests as well as the supplier interests.

Applicant performed a number of experiments in the e-shopping-mall simulation outlined in the preceding discussion. The results are given and discussed here.

Table 1 shows the parameters and their values which are varied for different simulation runs. The parameters refer to the preceding discussion. Two of the parameters are further explained below.

- Expected gross monopolistic profit (E{π}) functions: The E{π}-functions are explained above. The applied settings are specified in table 2. Figure 7 shows the functions "set2" for 8 different suppliers and a one-dimensional consumer profile. The functions defined in "set3" have different $\mu_i$ and $\delta$ combinations for each supplier; $\mu_i$ varies between 0:5 and 1:0, and $\delta$ between 1:0 and 2:0.

Table 1:

| Default settings of the simulations | |
|---|---|
| Parameter | Value |
| Number of suppliers | 8 |
| Number of banner spaces (*N*) | 3 |
| Maximum bid value | 1.5 |
| Consumer behavior model | 1 / 2 / 3 |
| Expected gross monopolistic profit (*E{π}*) | set1 / set2 / set3 |
| Profile dimensionality | 1 or 2 |
| Number of defining points | 8 (1 dimension), 16 (2 dimensions) |
| Number of consumers | 50 (1 dimension), 100 (2 dimensions) |

Table 2:

| Consumer purchase functions and their general settings. | | | | |
|---|---|---|---|---|
| E(π) function name | Type | μi | δ | σ |
| Set1 | Linear | 1.0 | 2.0 | - |
| Set2 | Gaussian | 1.0 | - | 0.2 |
| Set3 | Linear | variable | variable | - |

- Number of defining points: A supplier has to obtain a bidding function on the space of consumer profiles. The function that is learned is an interpolation function, based on a number of defining points. For the one-dimensional case, this results in a piecewise linear function; for the two-dimensional case, we obtain the function values by triangularisation of the profile surface.

We now illustrate the use and evolution of the bidding function for a supplier for a very simple setting, where the optimal bidding strategy is known from auction theory. The setting contains a single store competing against a random opponent for the case of one banner. The random player bids any random value between 0 and 1:5. Since a Vickrey (second-price) auction is used, it is a well-known dominant strategy for the supplier to bid its true valuation (i. e. the expected gross profit); any lower bid risks a missed profit-opportunity, whereas a higher bid might result in direct loss. The dominant strategy maximizes the supplier's net profit, regardless of the opponent's behavior. Thus, the store should learn the profit function as the bidding function. The results for experiments on this setting show that this happens indeed. Typical, good results are shown in figure 7, where E{π} is a Gaussian (recall that piecewise linear functions are used).

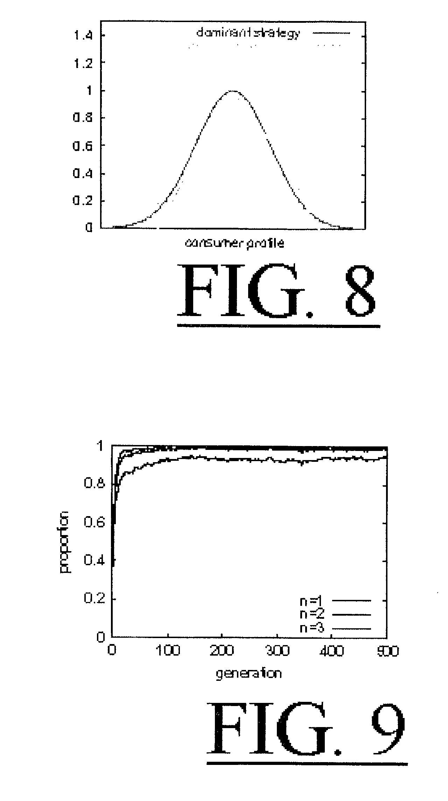

Figure 8 shows an example of a bidding strategy as employed by the supplier after coevolution no longer increased the profits obtained. Results are shown for a single supplier competing against random supplier. Also shown is the dominant bidding strategy.

A first consumer model called "Independent Visits with Several Purchases" assumes that expected purchases at each supplier can be modeled by the same function as in the single banner case. The results are shown in figure 9. Matching accuracy is measured in several ways. Figure 9 shows matching results for consumers with independent purchases and $E\{\pi\}$ is set to "set2".

We display the proportion of properly selected n suppliers for three banners and n = 3; 2; 1. The reason for including n = 2; 1 as well is that the evolutionary system has some degree of stochasticity, and thus small errors occurring frequently can have larger influence on individual outcomes (although relatively little impact on the payoff obtained). Results using these two measures show an almost perfect match. The results after 500 generations of the EA are summarized in table 3.

In a second consumer model, called "One Expected Purchase" it is more difficult to get a stable system, since the expected amount purchased at a supplier (and therefore the valuation of a banner space) depends on which other stores are selected as well. Nevertheless, the simulation does stabilize, and the results are comparable to the previous consumer model (see table 3).

Table 3:

| Matching results for consumer models 1 through 3. Results denote proportions of properly selected n suppliers for three banners and n = 3; 2; 1. Averages over 10 runs of the simulation are shown with the standard deviations. | | | | |
|---|---|---|---|---|
| Consumer model | $E\{\pi\}$ | n=3 | n=2 | n=1 |
| Regular auction settings | | | | |
| 1 | set1 | 0.94 ± 0.01 | 0.98 ± 0.01 | 0.99 ± 0.01 |
| | set2 | 0.94 ± 0.01 | 0.99 ± 0.00 | 0.99 ± 0.00 |
| | set3 | 0.90 ± 0.01 | 0.96 ± 0.01 | 0.98 ± 0.01 |
| 2 | set1 | 0.90 ± 0.01 | 0.96 ± 0.01 | 0.98 ± 0.01 |
| | set2 | 0.94 ± 0.01 | 0.99 ± 0.00 | 0.99 ± 0.00 |
| | set3 | 0.87 ± 0.02 | 0.95 ± 0.01 | 0.98 ± 0.01 |
| 3 | set1 | 0.68 ± 0.03 | 0.74 ± 0.04 | 0.81 ± 0.05 |
| | set2 | 0.73 ± 0.02 | 0.89 ± 0.02 | 0.89 ± 0.02 |
| | set3 | 0.74 ± 0.02 | 0.89 ± 0.03 | 0.97 ± 0.01 |
| Next-price auction | | | | |
| 3 | set1 | 0.79 ± 0.02 | 0.92 ± 0.02 | 0.97 ± 0.02 |
| | set2 | 0.75 ± 0.05 | 0.91 ± 0.02 | 0.98 ± 0.01 |
| | set3 | 0.80 ± 0.02 | 0.93 ± 0.02 | 0.99 ± 0.01 |

In a third consumer model, called "Search-Till-Found" it is not only important for the stores to be in the list, but also to take into account the position on the list (and the other stores above him). Table 3 shows that it is indeed more difficult for the stores to find a good matching, in particular when using "set1". This occurs since all relevant suppliers prefer the very top advertisement space and are willing to bid above their valuation (because of the N + 1-price auction their payment remains relatively low). As a result, the bids reach their limit value (even when this is set to 2.5).

Therefore, we have applied another auction payment procedure as well: each of the winning stores pays the price offered by the next following highest bidder, the so-called next-price auction. This procedure appears to improve the matching, giving comparable results to other consumer models (see table 3). Note that a store who obtains the first banner position now pays more than the other stores. This is also reasonable, since the first position is actually more valuable. We want to remark that we have chosen the maximal purchase probability to 1 to have maximum difference between this consumer model and the previous ones. When this value is lower, results will become more comparable to the other models also for the regular auction setting.

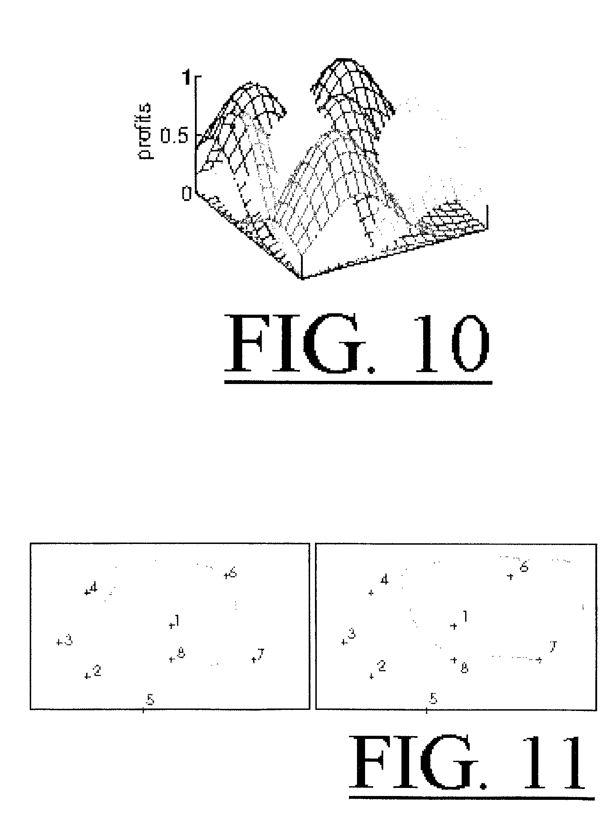

We now consider the two-dimensional case, where each consumer profile corresponds to a position within a square. The types of profit functions are similar to the previous case, extended for two dimensions. An example is shown in figure 10, presenting expected gross monopolistic profits $E\{\pi\}$ for "set2" function settings and a 2-dimensional consumer profile.

Table 4:

| Matching results for consumers with two-dimensional profiles. See also table 3 for comparison. | | | | |
|---|---|---|---|---|
| Consumer mode | E{π} | n=3 | n=2 | n=1 |
| 1 | set2 | 0.84 ± 0.02 | 0.94 ± 0.01 | 0.99 ± 0.00 |
| | set3 | 0.89 ± 0.01 | 0.96 ± 0.01 | 0.98 ± 0.00 |
| 2 | set2 | 0.87 ± 0.01 | 0.96 ± 0.01 | 0.99 ± 0.00 |
| | set3 | 0.88 ± 0.01 | 0.95 ± 0.01 | 0.98 ± 0.01 |

The matching results are comparable, but slightly less accurate than for one dimension. A short impression of the results is given by a representative selection in table 4.

These can be explained through the more difficult learning problem (more defining points are needed for the search function), and thus the settings of the evolutionary algorithms could be further optimized for more accurate learning results in this case.

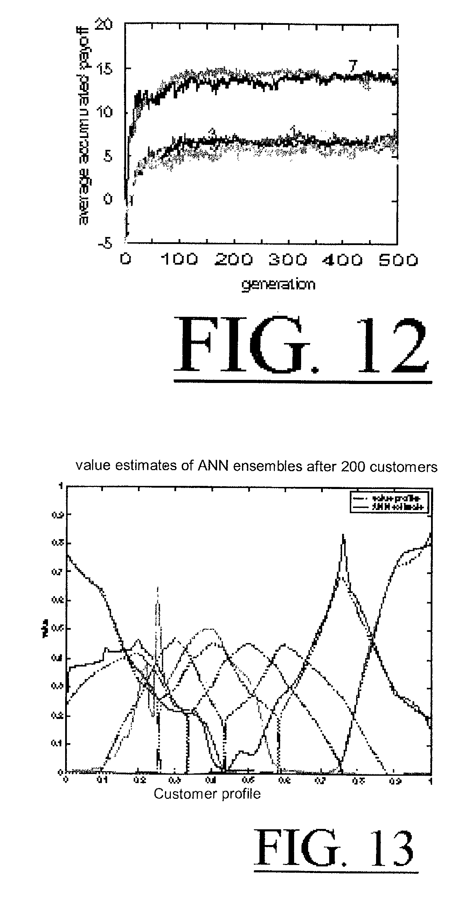

The suppliers find a niche in the market in case of competition. This becomes clear in figure 11, which shows the intersection of a supplier's bidding strategy for two different consumer models, viz. 1 and 2. For consumer model 1, a supplier's payoff is independent of the other suppliers displayed. In the second consumer model, however, the payoff is shared amongst the displayed suppliers. In the latter model the payoff thus depends on the competition. We find that this gives supplier an incentive to locate niches in the market, and bid more in places where less competition is present. In figure 10, the depicted supplier clearly expands its market to the upper right, and reduces its bids in the lower left region, where competition is relatively greater. Figure 11 illustrates contours of the average evolved strategy at level 0.5 of a supplier 1 at generation 500 for consumer models 1 (left) and 2 (right) using "set2". The points indicate the centers of attraction of the suppliers' Gaussian curves.

The above results mainly focus on the proportion of proper selection. We now briefly discuss the supplier payoffs, i.e. the net profits. Firstly, we find that in all experiments suppliers obtain positive accumulative payoff in the long run. The strategies emerged are thus individually rational. Secondly, a supplier's payoff depends both on its function settings E{π} and on the amount of 16 competition. The latter is shown in figure 12, which displays the average accumulated payoff of the suppliers for consumer model 2 and "set2". The more isolated suppliers, in particular suppliers 4, 6, and 7, obtain a larger payoff than those with much competition (see also figure 10). This is due to the difference in advertisement costs. Note that this is in accordance with economics theory: in case of large competition, the net profit of competing suppliers is close to zero.

The experiments show that a proper selection of suppliers emerges with very good matches. In case consumer model 3 is applicable, a next-price auction mechanism further improves the results. Furthermore, we find that all experiments show positive supplier payoffs. Finally, we observe that shops find their customers and their niche in the market via the CASy.

We now briefly describe the development of adaptive software agents that can perform online learning from a repeated general Vickrey auction, and we show some of the results we obtained with this adaptive approach based on neural networks.

First we remark that for online-learning, we deal with a variant of Reinforcement Learning. Reinforcement Learning is the problem faced by an agent that learns behavior through trial-and-error interactions with a dynamic environment. [http://www-2.cs.cmu.edu/afs/cs/project/jair/pub/volume4/kaelbling96a-html/rl-survey.html].

In the N +1-price sealed-bid auction, learning signals constitute of the (average) payoff generated by a winning bid for a particular consumer profile, as well as the information that a losing bid is below the winning bid, or "going price", in the market. Note that receiving payoff is in principle a stochastic process. Since payoff is normalized in the simulation, this stochastic nature can be expressed by taking the instant payoff as a discrete value 2 f0; 1g, which averages to the payoff we defined above.

For a given consumer profile, our agent generates two estimates: the expected payoff (the "value") and the expected going-price; in addition, uncertainties associated with these expectations are calculated. These values are then combined into a resulting bid according to a heuristic algorithm that balances the exploitation of accumulated information versus exploration aimed at reducing uncertainty in the estimates.

When exploiting, the agent bids the estimated payoff, as bidding the actual payoff is a dominant strategy in the N + 1-price auctions considered below. The algorithm was implemented with two ensembles (sets) of neural networks (multi-layer perceptrons, although alternative architectures could also be used) in each software agent, where each ensemble of networks acts as a function approximator that learns respectively the expected payoff and the going-price, both as a function of the consumer profile. By using ensembles of neural networks, we can use existing techniques for estimating the uncertainty in the respective function-approximations by the neural network ensembles. The uncertainty in the estimates constitutes an important ingredient in our heuristic for learning from losing bids.

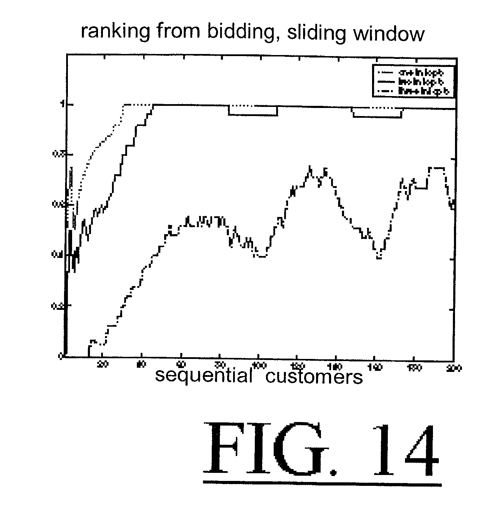

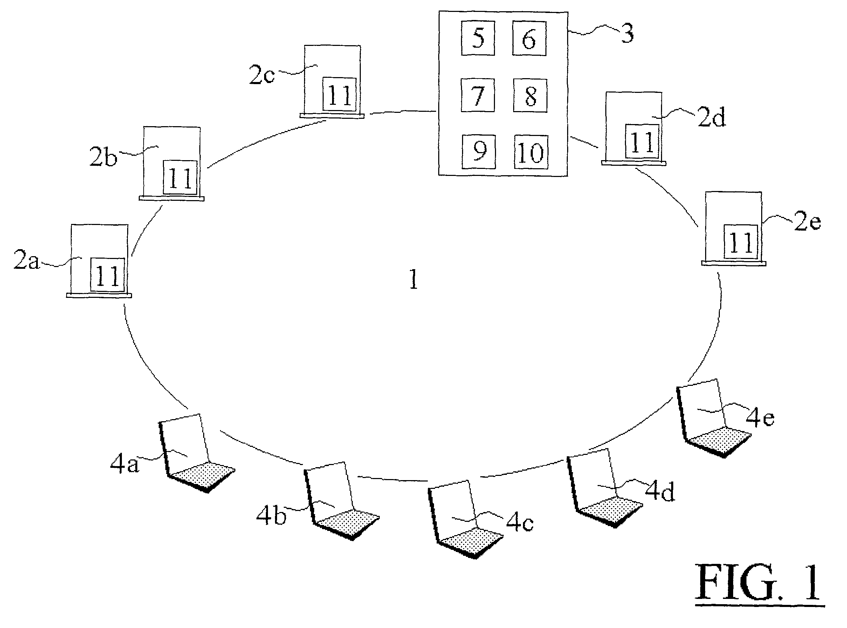

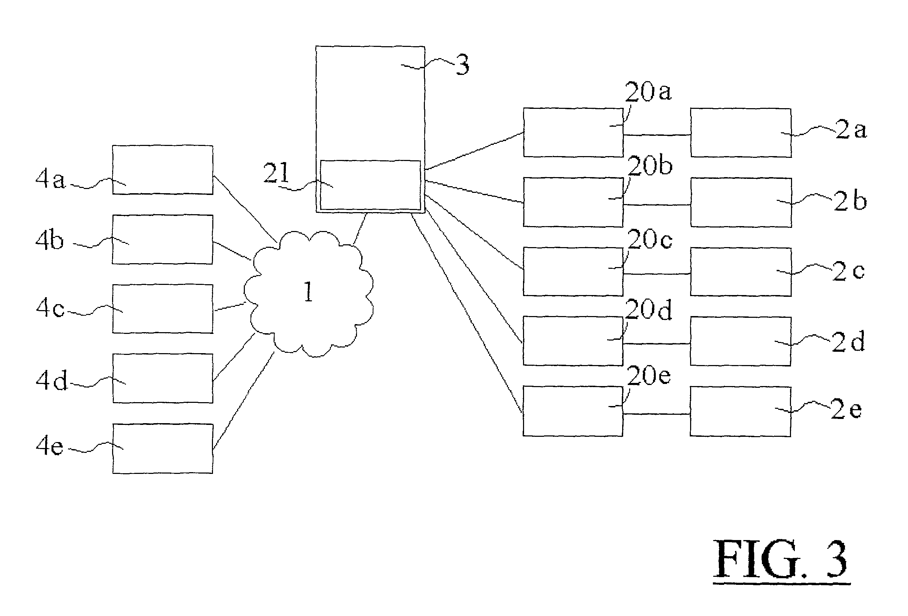

For the consumer models 1 and 2, it is easy to see that bidding the actual payoff by a shop is a dominant strategy. Within the shopping-mall simulation outlined above and these consumer models, we performed a number of experiments to test whether the shop-agents endowed with neural networks are capable of learning the correct valuations from the second-price auctioning of consumer-profiles. For all examples tested, we found that the agents accurately learned the payoff profiles, both for one and for three banners, a stochastic payoff or averaged payoff, and various numbers of competitors. We observed that the exploration-expenditure stabilized to a small fraction of the revenues after the initial learning phase of typically 50 consumers. After this time, all shops become (accumulated) profitable and generate accurately targeted bids. The time needed for learning was very short: on average it took less than 50 consumers to visit the mall for the shops to learn which consumers are profitable; this held for all simulations we performed, with up to 8 competing shops. An example of online learning for bidding on three available banners is shown in figures 13, 14. The results shown are for the case where for every winning bid the associated average payoff was returned (the case of stochastic payoff took somewhat longer to converge).

Figure 13 shows the consumer valuation as learned by the shop-agents (solid lines) after bidding for 200 consumer profiles, and the actual market valuation (dotted lines), for consumer behavior model 2. Figure 13 shows shop-selection resulting from the submitted bids. Plotted is the proportion of properly selected n suppliers for the 200 sequential consumers for three banners and n = 1; n = 2 and n = 3. Regularly one out of three matching shops is "ousted", but given the low payoff for third place in our experiments (third consumer valuation or dotted line in fig. 12), the third-highest bid is easily exceeded by even minimal explorations by other shops.

In the previous discussion, we have presented an innovative CASy and showed its feasibility. We can identify a number of commercial and technological advantages of the CASy. In the CASy, proper matching does not have to be performed or enabled by a third party. This significantly reduces the combinatorial complexity as compared to centrally processing all product ontology and information about consumers and shops. Furthermore, shops have substantial autonomy and can thus incorporate local domain knowledge and momentary business considerations in their bidding strategies and thus in the ultimate matching process. Especially, they do not have to reveal sensitive business information to a third party, and can take more sales aspects into account: not only product pricing, but also service level, quality, product diversity, or customization of products. The system also enables them to quickly adapt to market dynamics or their own internal situation (out-of-stock, discount periods, promotion). Note that the relevance of the shop for the consumer is still expressed via the monetary bidding procedure. Finally, the mechanism also is a form of dynamic pricing of attention space.

Yet, some points need attention when further implementing the CASy. In the CASy, information about a consumer is (partially) communicated to suppliers. At the same time, however, the consumer's privacy requirements can be respected. We will not extensively address this here, but just mention some approaches: having the consumer decide what information he allows to be communicated, restricting the types of communicated information in general, or conversion of personal information to more sales-related properties. Also, the communication between suppliers and shopping mall is increased because of the bidding process. If this becomes an issue of importance, an elaboration of this mechanism may be desirable, e.g. in the form of further partitioning per business sector.

Above, we investigated the concept of the CASy for several basic and simple models. It is important to investigate how software agents can be developed for more advanced and realistic settings. These can be based on our approach with neural networks and exploration heuristics, or on other adaptive machine learning and algorithmic techniques. Also, the role of (local) ontology, of marketing and data-mining techniques, and of partial consumer information can be taken into account. Furthermore, we placed an emphasis on the N+1-price auction with single sealed bids. Other types of auctions could be further investigated, for example addressing the possible feedback given on bids of other participants (e.g. multi-round auctions) or to address the revenue of the central manager.

From the consumer's point of view, we have interpreted the expenditures of a consumer at a shop as a measure for his interest in the shop. The CASy gives priority to suppliers with the largest expected payoffs for a given consumer. This thus leads to optimization of the revenue of the collection of shops in the shopping mall as a whole. In the case that within a certain business sector, the ratio between expenditures and payoff is similar for the suppliers in the sector, this means that the CASy completely reacts on the interest of an individual consumer. However, across different sectors, there may be differences or anomalies, leaving the extension of the CASy with additional (monetary) correction mechanisms.

In the above discussion, we have presented the best mode competitive distributed system, CASy, for allocating consumer attention space.

**Claims**

**1.** Method for automatic distribution of attention area content to a user interface via a transmission network, said attention area content being supplied by different attention area content suppliers and distributed by an attention area content mediator to one or more users, wherein the mediator enables an auction process, requesting to said attention area content suppliers to offer one or more bids for future distribution, via the mediator, of their respective attention area content, while the mediator selects one or more suppliers, based on a predetermined criterion.

2. The method according to claim 1, wherein said process is an automated process and wherein said predetermined criterion includes an evaluation of the best conditions.

3. The method according to claim 1, wherein the auction process occurs in real-time and continously can initialize or refresh the user interface with another or additional attention area content.

4. The method according to claim 1, wherein the bids are based on information about the user.

5. Method according to claim 1, wherein the mediator collects and processes user information relative to said users and supplies said information to said attention area content suppliers.

6. Method according to claim 5, wherein said user information comprises response data referring to responses of said users to said attention area content.

7. Method according to claim 5, at least part of said users setting their respective interface by means of personalisation parameters, wherein said user information comprises at least part of said personalisation parameters.

8. Method according to claim 1, wherein said conditions comprise a bid price.

9. Method according to claim 1, wherein said conditions comprise one or more quality indicators.

10. Method according to claim 1, wherein said auction process is a cyclically repeated process.

11. System for automatic distribution of attention area content to user interfaces via a transmission network (1), said attention area content being supplied by different attention area content suppliers (2) and distributed by an attention area content mediator (3) to different users (4), wherein
said mediator (3) comprises means (5) for the distribution of an attention area content supplied by a preferred supplier to said users, and accounting means (6) for recording a distribution condition;
said mediator comprising means (7) for processing user information referring to said users, as well as means (8) for transmitting said user information and said distribution conditions to the suppliers;
said mediator comprising means (9) for receiving, from said suppliers a condition bid for the distribution of a new attention area content, replacing said attention area content supplied by the preferred supplier, as well as means (10) for mutually comparing each received condition bid and the actual distribution condition and for selecting as new preferred supplier, the supplier offering the best condition according to a predetermined criterion;
said distribution means (5) distributing to said users the new attention area content supplied by said new preferred supplier and said accounting means (6) recording said best condition on the account of said new preferred supplier.

12. System according to claim 11, at least part of the users comprising means for setting their respective interface by means of personalisation parameters, wherein said means (7) for processing said user information are enabled to process at least part of said personalisation parameters.

13. A mediator system compiled on a computer environment and being arranged for distributing information items to users, said mediator system enabling an auction process, requesting suppliers to offer one or more bids for future distribution of their information items to the users and wherein the mediator selects, based on a predetermined criterion, one or more suppliers to enable said future distribution of their information items to the users.

**FIG. 2**

**FIG. 4**

**FIG. 5**

## FIG. 6

## FIG. 7

# FIG. 8

# FIG. 9

## FIG. 10

## FIG. 11

# FIG. 12

value estimates of ANN ensembles after 200 customers

Customer profile

# FIG. 13

ranking from bidding, sliding window

FIG. 14

FIG. 1

EP 1 274 034 A1

3

21

20a

4a

4b

2a

20b

4c

2b

20c

1

4d

2c

20d

4e

2d

20e

2e

FIG. 3

**European Patent Office**

## DECLARATION

which under Rule 45 of the European Patent Convention shall be considered, for the purposes of subsequent proceedings, as the European search report

**Application Number**

EP 02 07 7650

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---

| Place of search | Date | Examiner |
|---|---|---|
| THE HAGUE | 14 November 2002 | Nicoli, F |

EPO FORM 1504 (P04C37)